# EUROPÄISCHE PATENTSCHRIFT

(11) **EP 2 218 380 B1**
(45) Veröffentlichungstag und Bekanntmachung des Hinweises auf die Patenterteilung: **09.04.2014**
(21) Anmeldenummer: 09001893.8
(22) Anmeldetag: 11.02.2009
(51) Int. Cl.: A47J 36/08

(54) **Kochgeschirr zum Kochen und Abgießen**
Cooking vessel for cooking and pouring
Récipient de cuisson destiné à cuire et à verser

(43) Veröffentlichungstag der Anmeldung: 18.08.2010
(73) Patentinhaber: Norbert Woll GmbH, 66115 Saarbrücken (DE)
(72) Erfinder: Krämer, Ralph, 66121 Saarbrücken (DE)
(74) Vertreter: Grünecker, Kinkeldey, Stockmair & Schwanhäusser

(56) Entgegenhaltungen:
- WO-A-95/21562
- DE-U1- 9 216 232
- DE-U1- 9 401 119

## Beschreibung

Die Erfindung betrifft ein Kochgeschirr zum Kochen und Abgießen, umfassend einen Behälter mit zwei seitlich einander gegenüberliegend angeordneten Griffen und einem als Auflagerand ausgebildeten oberen Randabschnitt und einen Deckel mit wenigstens einem Griffelement und einem Deckelrand, welcher in einer Kochposition formschlüssig und gegen seitliches Verschieben gesichert auf den Auflagerand des Behälters aufsetzbar ist wie z.B. in DE9401119 offenbart.

Kochtöpfe im klassischen Sinn sind in der Regel mit zwei gegenüberliegenden, schlaufenartig, parallel zum Boden angeordneten Griffbügeln ausgestattet. In der Regel werden die Kochtöpfe mit passenden losen Deckeln geliefert, mit welchen der Kochtopf während des Kochvorganges zeitweise geschlossen werden kann.

Hierbei ist es während der Zubereitung von Nahrungsmitteln häufig erforderlich, den Deckel während des Kochvorganges von dem Kochtopf abzunehmen, z.B. um die Nahrungsmittel umzurühren, oder um ein Entweichen des entstehenden Dampfes zu ermöglichen. Ein entsprechendes Abnehmen des Deckels während des Kochprozesses hat häufig zur Folge, dass der heiße Deckel im Bereich des Kochfeldes liegt, so dass die Gefahr besteht, dass sich die kochende Person an dem Deckel verbrennt, oder sich an der im Bereich der Innenseite des Deckels angesammelten Flüssigkeit verletzt, oder dass diese das Kochumfeld verunreinigt.

Ferner erfordert das Zubereiten einer Vielzahl von Nahrungsmitteln, beispielsweise Gemüse, Kartoffeln, Nudeln, ein anschließendes Abgießen der Kochflüssigkeit, z.B. Wasser, die zu dem Zeitpunkt des Abgießens noch sehr heiß ist. Hierbei wird das Abgießen in der Regel durch andere Küchenutensilien oder Werkzeuge durchgeführt, z.B. Siebe, Abtropfgitter oder dergleichen. Durch diese Lösung ist es jedoch notwendig, dass zusätzliche Küchenutensilien anschließend gewaschen werden müssen, gleichermaßen können die Nahrungsmittel durch das Schütten aus dem Kochtopf beschädigt werden, so dass das Nahrungsmittel nach dem Kochen optisch nicht mehr so ansprechend ist.

Es gibt andere Lösungen, um die mit den bekannten Abgießutensilien verknüpften Probleme zu lösen. So kann innerhalb des Topfes ein Einsatz verwendet werden, in welchen die Nahrungsmittel während des Kochprozesses eingeführt werden und der das Abgießen einfach durch Anheben des Einsatzes aus dem Topf ermöglicht. Wird ein entsprechender Einsatz jedoch als festes Abgießgefäß mit einer Vielzahl von Löchern ausgebildet, so erfordert das Kochen mit einem entsprechenden Einsatz nicht nur eine größere Menge an Wasser, sondern auch eine höhere Energiemenge. Wird der Einsatz lediglich aus einem Drahtgewebe hergestellt, macht dies häufig ein aufwendiges und sorgfältiges Waschen nach der Verwendung notwendig.

Um die Verwendung entsprechender Abgießutensilien zu vermeiden, ist ein häufig verwendeter Ansatz, den Deckel des Topfes leicht versetzt zu der Topföffnung anzuordnen, so dass ein schmaler Spalt entsteht, und den Deckel in dieser Position mit Hilfe der Daumen zu fixieren und die Kochflüssigkeit abzugießen. Hierbei ist es notwendig, Topflappen zu verwenden, um Verbrennungen durch den heißen Topfdeckel zu vermeiden. Gleichzeitig ist viel Kraft notwendig, um ein Verschieben des Deckels während des Abgießens zu verhindern, da die in dem Topf enthaltenen Nahrungsmittel während des Abgießens gegen den Topfdeckel drücken. Zudem ist ein entsprechend eingestellter Spalt meist zu klein, oder zu groß, so dass einerseits das Abgießen sehr lange dauert, oder Nahrungsmittel während des Abgießens mit aus dem Topf gespült werden.

Aufgabe der vorliegenden Erfindung ist es daher, ein Kochgeschirr zur Verfügung zu stellen, welches gleichermaßen zum Kochen und zum Abgießen eingesetzt werden kann.

Diese Aufgabe wird durch ein Kochgeschirr zum Kochen und Abgießen umfassend einen Behälter mit zwei seitlich einander gegenüberliegend angeordneten Griffen und einem als Auflagerand ausgebildeten oberen Randabschnitt und einen Deckel mit wenigstens einem Griffelement und einem Deckelrand, welcher in einer Kochposition formschlüssig und gegen seitliches Verschieben gesichert auf dem Auflagerand des Behälters aufsetzbar ist, dadurch gelöst, dass die Behältergriffe solchermaßen an dem Behälter angeordnet und ausgebildet sind, dass eine Grifffläche oberhalb des Auflagerands des Behälters abgewinkelt ist und das der Deckel mit zwei einander gegenüberliegende Deckelgriffelemente ausgebildet ist, welche sich seitlich über den Deckelrand hinaus erstrecken und mit den Behältergriffen in einer Abgießstellung in Eingriff bringbar sind, so dass der Behälterrand und der Deckelrand in der Abgießstellung mit einen vorbestimmten Abstand voneinander angeordnet sind.

Das erfindungsgemäße Kochgeschirr ermöglicht somit erstmalig das Kochen und nachfolgende Abgießen der Kochflüssigkeit ohne das zusätzliche Hilfsmittel verwendet werden müssen. Dies wird durch ein einfaches Verschieben bzw. Versetzen des Deckels erzielt, so dass die Griffe des Deckels auf den Griffen des Behälters zu liegen kommen und hierdurch ein schmaler Spalt über den gesamten Umfang des Behälterrandes entsteht, d.h. der Deckel wird um einen vorbestimmten Abstand relativ zu dem Behälter angehoben, so dass der Deckelrand und die Auflage des Behälters parallel zueinander angeordnet sind, sich jedoch nicht länger berühren. Dem Koch wird hierbei ermöglicht, den Deckel sowie den Behälter gleichzeitig über die aufeinanderliegenden Griffe zu fixieren und so das Abgießen zu bewerkstelligen, ohne dass ein direkter Kontakt mit dem in der Regel sehr heißen Deckel entsteht.

Vorteilhafterweise kann vorgesehen sein, dass der Behälterrandabschnitt nach außen abgewinkelt ist, um den Auflagerand auszubilden. Hierdurch kann die Auflagefläche vergrößert werden, und ein sicherer und breiter Rand als Auflagebereich für den Deckel bereitgestellt werden.

Vorteilhafterweise können die Behältergriffe an der Unterseite des Auflagerandes befestigt sein. Diese Ausführungsform realisiert eine sichere Befestigung der Behältergriffe an dem Behälter, wobei das für die Behältergriffe notwendige Material auf ein Minimum beschränkt werden kann, und wobei durch einfache Mittel sichergestellt werden kann, dass die Behältergriffe oberhalb des Auflagerandes abgewinkelt sind.

Erfindungsgemäß sind die Behältergriffe U-förmig ausgebildet, umfassend zwei U-Schenkel und ein die Grifffläche bildendes Basiselement. Wobei die U-Schenkel vorteilhafterweise wenigstens einmal abgewinkelt und über einen vorbestimmten Abschnitt mit dem Auflagerand verbunden sind. Durch die Abwinkelung wird eine für das Aufnehmen des Behälters angenehme Griffhaltung erzielt, gleichzeitig wird durch die Ausbildung der Griffbehälter als U-förmige Elemente, ein ausreichender Abstand der Grifffläche von der zeitweise heißen Behälteraußenseite erzielt.

Gemäß einer weiteren bevorzugten Ausführungsform können sich die U-Schenkel über den Auflagerand hinaus erstrecken und dann unter einem Winkel von ca. 90° abgewinkelt sein. Hierdurch wird die konkrete Position der Grifffläche bestimmt, d.h. oberhalb des Auflagerandes und abgewinkelt von diesem, so dass jederzeit ein ausreichender Abstand zu der Behälteraußenoberfläche gewährleistet ist. Vorteilhafterweise können die U-Schenkel zweimal abgewinkelt sein, einmal auf Höhe des Auflagerandes, und einmal mit einem vorbestimmten Abstand zu der ersten Abwinkelung. Hierdurch wird gewährleistet, dass die Behältergriffe nicht zu weit von dem Behälter entfernt angeordnet sind und so zuviel Platz beim Wegräumen beanspruchen. Die erste Abwinklung ist hierbei durch den Auflagerand vorgegeben, mit der zweiten Abwinklung wird erzielt, dass sich der U-Schenkel mit einer geringeren Neigung relativ zu der Oberfläche des Behälters von diesem erstreckt.

Gemäß einer weiteren bevorzugten Ausführungsform kann an der Unterseite der Grifffläche ein Isolierelement angeordnet sein, welches sich über das Basiselement hinaus bis zwischen die U-Schenkel erstreckt. In der Regel wird der Behältergriff aus einem metallischen Material geformt, welches sich trotz geeigneter Materialwahl und Ausbildung der Verbindung zwischen Griff und Behälter mitunter leicht erwärmen kann. Durch die Bereitstellung eines zusätzlichen Isolierelementes an der Unterseite der Grifffläche wird ein zusätzliches Sicherheitsmerkmal bereitgestellt, welches der besseren Bedienbarkeit des Behälters dient. Vorteilhafterweise kann sich das Isolierelement bis zu der oberhalb des Auflagerandes angeordneten 90°-Abwinkelung im Bereich der U-Schenkel erstrecken.

Vorteilhafterweise kann das Isolierelement Fixierstege aufweisen, welche an den Innenseiten der U-Schenkel und des Basiselementes anliegen. Hierdurch wird die Positionierung des Isolierelementes erleichtert, da es quasi in das U-Element einrasten kann.

Gemäß einer bevorzugten Ausführungsform kann die Höhe der Fixierstege der Materialdicke der Griffelemente entsprechen. Hierdurch wird einerseits ein optisch ansprechendes Design erzielt, gleichermaßen entstehen keine unerwünschten Kanten, die die Reinigung des Behälters erschweren.

Gemäß einer weiteren bevorzugten Ausführungsform kann der zwischen den U-Schenkeln und dem Basiselement angeordnete Bereich des Isolierelementes vertieft und/oder verkürzt ausgebildet sein.

Eine weitere Ausführungsform sieht vor, dass die Unterseite des Isolierelementes geriffelt ausgebildet ist. Hierdurch kann eine bessere Griffigkeit des Isolierelementes erzielt werden.

Weiterhin können die über den Deckelrand überstehenden Abschnitte der Deckelgriffe der Form der Vertiefung der Isolierelemente entsprechen. Auf diese Weise kann eine einfache Fixierung des Deckels in der Abgießposition im Bereich der Behältergriffe erzielt werden, die Deckelgriffe werden zu diesem Zweck einfach auf die Vertiefungen in den Behältergriffen aufgelegt, und in diesen gehalten.

Vorteilhafterweise entspricht die Höhe der Vertiefung der Höhe des über den Deckelrand überstehenden Abschnittes der Deckelgriffe. Auf diese Weise können die Deckelgriffe mit den Griffflächen der Behältergriffe eine Einheit bilden und so dass die Fixierung des Deckels im Bereich der Griffe erleichtert wird.

Gemäß einer weiteren bevorzugten Ausführungsform kann die Neigung der Deckelgriffe in etwa der Neigung der Griffflächen entsprechen. Auch diese Ausführungsform dient der besseren Fixierung der Deckelgriffe an den Behältergriffen während des Abgießens.

Vorteilhafterweise kann vorgesehen sein, dass die beiden Deckelgriffe über ein sich über den Deckel zwischen den Deckelgriffen erstreckendes Halteelement verbunden sind. Ein entsprechendes Halteelement erleichtert die Handhabung des Deckels, da dieser nicht an zwei voneinander beabstandeten Deckelgriffen aufgenommen werden muss, sondern einfach im Bereich des Halteelementes gehalten werden kann. Die Breite des Halteelementes stellt hierbei ein besonders bequem zu bedienendes Element zur Verfügung.

Gemäß einer anderen bevorzugten Ausführungsform kann vorgesehen sein, dass die Deckelgriffe ein an dem Deckelrand angeordnetes Stegelement und ein sich beiderseitig über den Deckelrand und über das Stegelement erstreckendes Griffelement aufweisen.

Vorteilhafterweise kann vorgesehen sein, dass der Deckelrand die gleiche Neigung wie der Auflagerand aufweist. Hierdurch wird ein sicheres Verschließen des Topfes in der Kochposition gewährleistet.

Gemäß einer anderen bevorzugten Ausführungsform können die Deckelgriffe wenigstens in dem im Bereich des Deckelrandes und über diesen hinaus erstreckenden Bereich Griffmulden aufweisen. Entsprechende Griffmulden verbessern die Fixierung des Deckels in der Abgießposition, da hier einfach die Daumen auf die entsprechenden Mulden aufgelegt werden können.

Vorteilhaftweise kann vorgesehen sein, dass für die Isolierelemente und die Deckelgriffe das gleiche Material verwendet wird. Hierdurch wird einerseits die Optik beider Elemente einem einzigen Design zugeordnet, gleichzeitig wird auf aufwendige Verarbeitung verschiedenster Materialien verzichtet.

Gemäß einer weiteren bevorzugten Ausführungsform kann vorgesehen sein, dass der zwischen dem Auflagerand und dem Isolierelement zwischen den beiden einander gegenüberliegenden U-Schenkeln gebildete Spalt der Höhe und Breite des über den Deckelrand überstehenden Abschnitts der Deckelgriffe entspricht.

Nachfolgend wird eine bevorzugte Ausführungsform der Erfindung unter Bezugnahme auf die beigefügten Zeichnungen näher erläutert. Es zeigt:
- Figur 1: eine dreidimensionale Ansicht eines erfindungsgemäßen Kochgeschirrs, wobei sich der Deckel in Kochposition befindet,
- Figur 2: eine dreidimensionale Aufsicht auf das Kochgeschirr gemäß Figur 1, wobei sich der Deckel in der Abgießposition befindet,
- Figur 3: eine Seitenansicht des Kochgeschirrs aus Figur 3,
- Figur 4: eine perspektivische Seitenansicht des erfindungsgemäßen Kochgeschirrs, wobei der Deckel in einer Halteposition eingerastet wurde,
- Figur 5: eine perspektivische Aufsicht auf das Isolierelement,
- Figur 6: eine perspektivische Ansicht der Unterseite des Isolierelementes,
- Figur 7: eine Vergrößerung des Griffelementes mit darauf angeordnetem Isolierelement von der Unterseite,
- Figur 8: eine perspektivische Aufsicht auf einen Deckelgriff, und
- Figur 9: eine perspektivische Darstellung der Unterseite des Griffelementes.

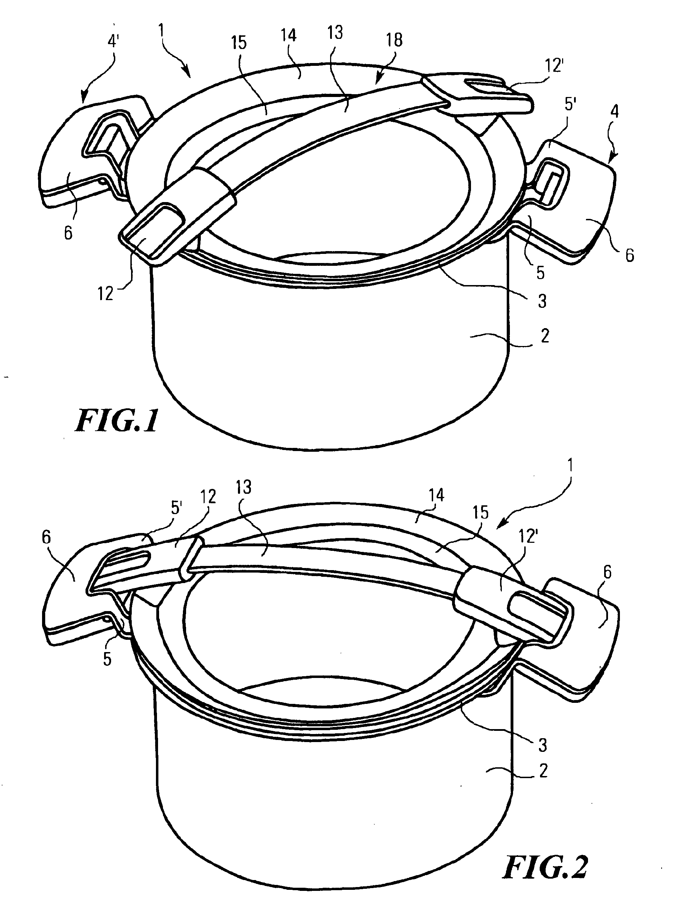

Das in Figur 1 dargestellte Kochgeschirr 1 umfasste einen topfförmig ausgebildeten Behälter 2 sowie einen darauf angeordneten Deckel 18. Hierbei ist der Behälter 2 mit einem nach außen geneigten Randabschnitt ausgebildet, welcher auf diese Weise einen Auflagerand 3 bildet und bereitstellt. Der Auflagerand 3 neigt sich hierbei mit einem Winkel von vorzugsweise 110 -140° relativ zu der Außenoberfläche des Behälters 2.

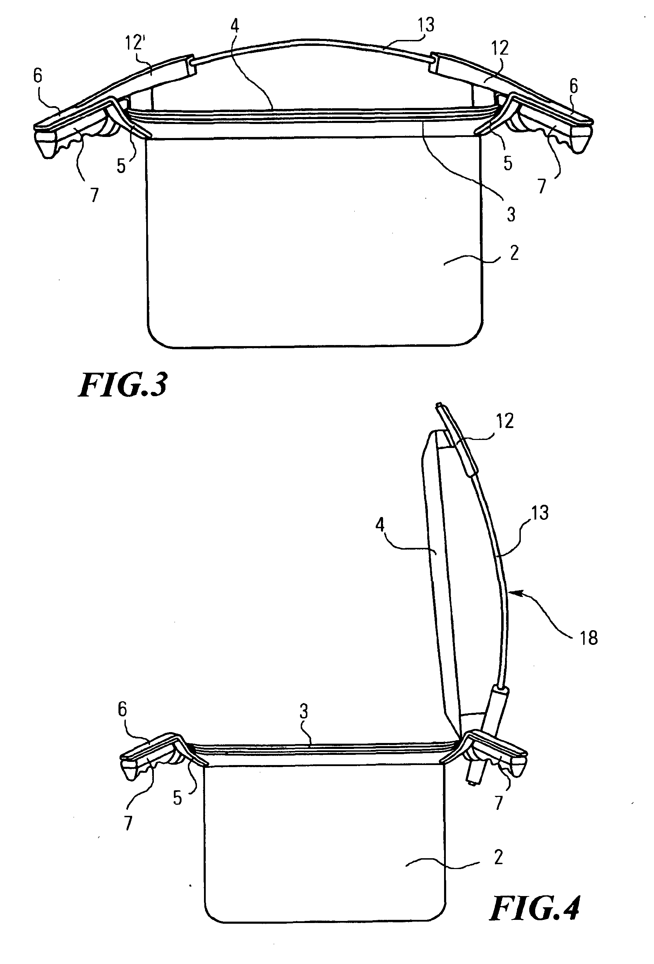

An zwei einander gegenüberliegenden Positionen sind an der Außenseite des Behälters 2 Behältergriffe 4, 4' angeordnet. Die Befestigung der Behältergriffe 4, 4' sowie ihre konkrete Ausgestaltung ist insbesondere auch in den Figuren 3, 4 und 7 dargestellt.

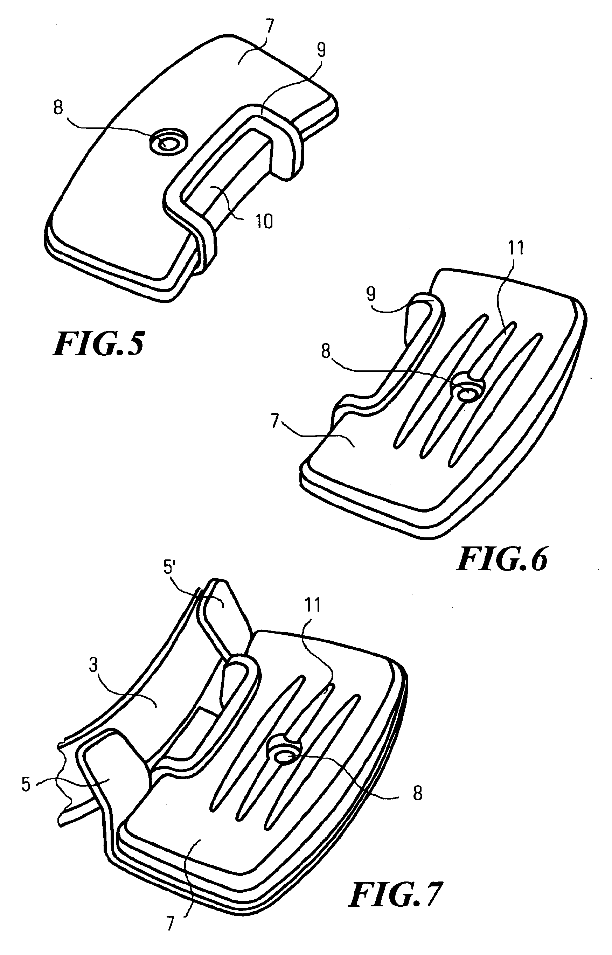

Wie deutlich wird, ist jeder Behältergriff 4, 4' U-förmig ausgebildet, umfassend zwei U-Schenkel 5, 5' sowie ein Basiselement 6, welches dem Behälter 2 gegenüberliegend angeordnet ist. Hierbei sind die Behältergriffe 4, 4' im Bereich der U-Schenkel mit dem Behälter 2, d.h. mit der Unterseite des Auflagerandes 3 des Behälters, wie in Figur 7 dargestellt, verbunden, wohingegen das Basiselement 6 die Grifffläche bereitstellt. Im Bereich des Auflagerandes weisen die U-Schenkel 5, 5' die gleiche Neigung wie der Auflagerand auf, sind jedoch am Ende des Auflagerandes abgewinkelt, mit einem Winkel von ca. 140 bis 170° relativ zu der Außenoberfläche des Behälters 2. Hierdurch wird erzielt, dass sich die U-Schenkel deutlich über die Oberseite des Auflagerandes hinaus erstrecken, ohne sich zu weit von der Außenkante des Auflagerandes 3 zu entfernen, so dass die Behältergriffe 4, 4' nicht zu weit von dem Behälter 2 abstehen. Nach Erreichen des gewünschten Abstandes relativ zu der Oberseite des Auflagerandes 3 werden die U-Schenkel 5, 5' erneut unter einem Winkel von 90° in die von dem Behälter abgewandte Richtung abgewinkelt, wodurch die Neigung der Grifffläche 6 festgelegt wird. Die Grifffläche 6 wird hierdurch leicht nach unten geneigt und bietet somit einen guten Untergriff beim Befördern von schweren Nahrungsmitteln.

Jeder Behältergriff 4, 4' ist an seiner Unterseite mit einem Isolierelement 7 versehen, welches in den Figuren 5 und 6 näher dargestellt ist. Das Isolierelement 7 weist im Wesentlichen die Form, d.h. die Außenform, des Griffelementes 4, 4' auf, erstreckt sich jedoch nur bis zu dem 90°-Winkel im Bereich der U-Schenkel 5, 5', d.h. es steht über das Basiselement 6 über. Das Griffelement 7 ist hierbei an der Unterseite des Behältergriffes 4, 4' angeordnet, und kann vorzugsweise eine Bohrung 8 aufweisen, um mit einer Schraube an dem Basiselement befestigt zu werden. Hierdurch wird die Austauschbarkeit der Isolierelemente im Betrieb gewährleistet.

Das Isolierelement 7 weist an seiner der Innenseite der U-Schenkel sowie des Basiselementes zugewandten Oberfläche einen Fixiersteg 9 auf, welcher der Innenkontur des U-Elementes entspricht. Auf diese Weise wird eine leichte Positionierung des Isolierelementes 7 im Bereich der Behältergriffe 4, 4' erzielt, die perfekte Position ist erreicht, wenn der Fixiersteg 9 an den Innenseiten der U-Schenkel 5, 5' sowie der Innenseite des Basiselementes 6 anschlägt. Hierbei entspricht die Höhe des Fixiersteges 9 in etwa der Materialstärke der Behältergriffe, so dass der Fixiersteg im Wesentlichen optisch durch die unterschiedlichen Materialien zu Tage tritt. Die Fixierstege können hierbei nicht nur an der Oberseite der Isolierelemente 7, sondern auch an der dem Auflagerand 3 zugewandten Seite des Isolierelementes 7 angeordnet sein, um so auch die um 90° abgewinkelten Bereiche der U-Schenkel 5, 5' zusätzlich mitzufixieren.

Der zwischen den U-Schenkeln 5, 5' und dem Basiselement 6 angeordnete Bereich 10 des Isolierelementes, d.h. der sich zwischen dem Fixiersteg 9 erstreckende Bereich, weist vorzugsweise eine geringere Höhe auf als der Rest des Isolierelementes auf. Vorzugsweise kann das Material in dem Bereich 10 auch verkürzt ausgebildet sein, d.h. es erstreckt sich nicht bis zu dem 90°-Winkel der U-Schenkel 5, 5'.

Wie in Figur 6 dargestellt, kann der Fixiersteg 9 über der Oberseite und Unterseite des Isolierelementes 7 als ein kontinuierlicher Steg ausgebildet sein. Ferner können im Bereich der Unterseite des Isolierelementes muldenartig ausgebildete Riffelungen 11 vorgesehen sein, welche ein besseres Greifen des Behälters im Bereich der Unterseite der Behältergriffe ermöglicht.

Der Deckel 18 des erfindungsgemäßen Kochgeschirrs 1 weist zwei Griffelemente 12, 12', ein Halteelement 13, einen Randbereich 14 sowie einen Deckelbereich 15 auf. Hierbei wird der Deckelrand 14 von dem Außenumfang des Deckels gebildet, welcher unter einem vorbestimmten Winkel relativ zu dem Deckelbereich 15 abgewinkelt ist. Hierbei entspricht die Neigung sowie die Breite des Deckelrandes 14 dem Auflagerand 3 des Behälters, so dass der Deckelrand 14 und der Auflagerand 3 im geschlossenen Zustand des Kochgeschirrs formschlüssig aufeinander aufliegen.

Der Deckelbereich 15 kann hierbei aus Vollmaterial mit einer leichten nach oben gerichteten Wölbung oder unter Einarbeitung eines Glaselementes zur besseren Aufsicht auf das im Behälter befindliche Nahrungsmittel ausgebildet sein. Bei den hier dargestellten Figuren ist zentral in den Deckel ein rundes, leicht gewölbtes Glaselement eingesetzt.

In der in Figur 1 dargestellten Position befindet sich das Kochgeschirr in der Kochposition, d.h. der Deckelrand 14 und der Auflagerand 3 liegen unmittelbar aufeinander auf. Um diese Position zu erzielen, müssen die beiden Deckelgriffe 12, 12' versetzt zu den Behältergriffen 4, 4' angeordnet sein. Die Deckelgriffe 12, 12' erstrecken sich, wie dargestellt, jeweils seitlich über den Deckelrand 14 hinaus.

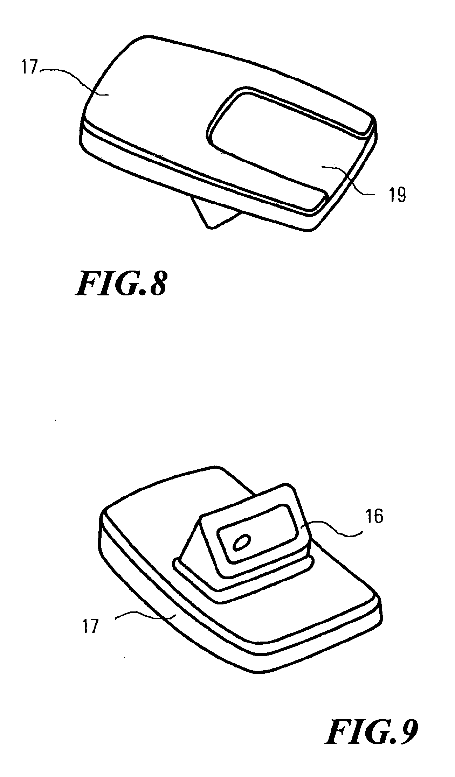

Eine Ansicht der Ober- und Unterseite des Deckelgriffs ist in Figur 8 und 9 dargestellt. Die beiden Deckelgriffe 12, 12' sind einander gegenüberliegend im Bereich des Deckelrandes 14 an dem Deckel angeordnet und umfassen ein Stegelement 16 sowie ein Griffelement 17. Wie insbesondere auch aus der Seitenansicht der Figur 3 deutlich wird, ist das Stegelement 16 solchermaßen ausgebildet, dass sich das Griffelement 17 deutlich über der Oberseite des Deckels 18 erhebt, wobei jedes Griffelement geneigt ausgebildet ist, d.h. die Griffelemente neigen sich voneinander weg leicht nach unten, über den Außenrand des Deckelrandes 14 hinaus. Das Griffelement 17 ist hier größer als das Stegelement 16 ausgebildet, wobei insbesondere die sich beidseitig über den Deckelrand 14 hinaus erstreckenden Abschnittes des Griffelementes 17 deutlich über das Stegelement 16 hinaus erstrecken.

Zwischen den beiden Deckelgriffen 12, 12' ist ein Halteelement 13 angeordnet, welches in entsprechende Aufnehmungen im Bereich der Griffelemente 17 eingeführt und dort fixiert werden kann. In Kombination mit dem Halteelement 13 weisen die beiden Griffelemente in der Seitenansicht eine leicht abgerundete Form auf. Das Halteelement selbst kann hierbei vorzugsweise aus einem Metall gefertigt sein, und ermöglicht ein leichtes Aufnehmen des Deckels während des Kochens.

Im Bereich der Oberseite der Griffelemente 17 kann eine Griffmulde 19 vorgesehen sein, welche in dem sich über den Deckelrand 14 hinaus erstreckenden Bereich der Deckelgriffe 12, 12' ausgebildet ist. Diese Griffmulden 19 sind im Wesentlichen als leichte Vertiefungen ausgebildet, welche ein leichteres Positionieren des Daumens des Kochs im Bereich der Deckeigriffe ermöglicht.

Die äußere Form der Griffelemente 17, insbesondere die sich über den Deckelrand 14 hinauserstreckenden Abschnitte der Deckelgriffe 12, 12', ist so ausgebildet, dass sie der Form der vertieften Bereiche 10 des Isolierelementes 7 entspricht, so dass die Griffelemente 17 in die vertieften Bereiche 10 einrastbar sind, wobei in dieser Position die Außenkante der Griffelemente 17 an der Außenseite der Fixierstege 9 anliegt. In Figur 3 ist der Deckel in der eingerasteten Position von der Seite, sowie in Figur 2 schräg von oben dargestellt. Die Höhe der Griffelemente 17 ist hierbei so gewählt, dass sie sich nicht wesentlich über die Griffflächen 6 der Behältergriffe hinaus erstreckt, sondern im Wesentlichen eine Einheit mit diesen bildet.

Wie aus den Figuren 2 und 3 deutlich wird, sind der Deckel 18 und der Behälter 2, wenn die Deckelgriffe auf den Behältergriffen eingerastet sind, einen vorbestimmten Abstand voneinander entfernt fixiert, wodurch eine Abgießposition erzielt wird. Zwischen dem Deckelrand und dem Auslaufrand entsteht hierbei ein schmaler Spalt, durch den ohne Probleme das Kochwasser bzw. die Kochflüssigkeit abgegossen werden kann, ohne das die Gefahr besteht, dass auch Nahrungsmittel mit nach außen dringen. Dies wird insbesondere durch die Breite der Randbereiche gewährleistet, die gleichzeitig einen Zurückhalteschutz bereitstellen. Da die Deckelgriffe auf den Behältergriffen einrasten, ist die Position des Deckels 18 relativ zu dem Behälter 2 fixiert, und der Deckel kann einfach durch Ausüben von Druck in dem Bereich der Griffmulden 19 in seiner Position gehalten werden.

Die besondere Konstruktion des erfindungsgemäßen Kochgeschirrs 1 ermöglicht es jedoch zusätzlich, den Deckel in einer Parkposition bzw. Halteposition zu fixieren. Diese Halteposition ist in Figur 4 dargestellt. Hierbei kann der Deckel 8 durch Einführen eines Griffelementes in dem zwischen Dem Behältergriff, d.h. insbesondere dem Isolierelement, und dem Topfrand 3 entstehenden Spalt, d.h. zwischen die beiden U-Schenkeln 5, 5' eingeführt werden und wird in dieser Position gehalten. Durch die geneigte Ausgestaltung des Griffelementes 17 relativ zu dem Steg wird eine vorbestimmte Neigung des Deckels von etwas weniger als 90° relativ zu dem Behälter erzielt, wodurch die Deckelposition stabilisiert wird, und ein Umfallen des Topfes bei fixiertem Deckel vermieden werden kann. Da der Deckelrand in der Halteposition im Bereich des Auflagerandes 3 angeordnet ist, kann an der Deckelinnenseite angesammelte Kochflüssigkeit einfach in den Behälter 2 zurücklaufen, und es besteht nicht die Gefahr, sich durch diese Flüssigkeit zu verbrennen, oder das Kochumfeld durch diese Flüssigkeit zu verunreinigen. In der Halteposition können einfach zusätzliche Nahrungsmittel in den Behälter eingeführt werden oder die darin befindlichen Nahrungsmittel umgerührt werden.

## Patentansprüche

1. Kochgeschirr (1) zum Kochen und Abgießen umfassend einen Behälter (2) mit zwei seitlich einander gegenüberliegend angeordneten Griffen (4, 4') und einem als Auflagerand (3) ausgebildeten oberen Randabschnitt und einen Deckel (18) mit wenigstens einem Griffelement (12, 12', 13) und einem Deckelrand (14), welcher in einer Kochposition formschlüssig und gegen seitliches Verschieben gesichert auf dem Auflagerand (3) des Behälters (2) aufsetzbar ist, die Behältergriffe (4, 4') solchermaßen an dem Behälter (2) angeordnet und ausgebildet sind, dass eine Grifffläche (6) oberhalb des Auflagerands (3) des Behälters (2) abgewinkelt ist und das der Deckel (18) mit zwei einander gegenüberliegende Deckelgriffelemente (12, 12') ausgebildet ist, welche sich seitlich über den Deckelrand (14) hinaus erstrecken, **dadurch gekennzeichnet, dass** die Behältergriffe U-förmig ausgebildet sind, umfassend zwei U-Schenkel (5,5') und ein die Grifffläche (6) bildendes Basiselement, und das die Deckelgriffelemente (12', 12") in einer Abgießstellung solchermaßen mit den Behältergriffen (4, 4') in Eingriff bringbar sind, dass sie zwischen dem U-Schenkel und dem Basiselement der Behältergriffe einrasten, wodurch der Deckel unter Bildung eines schmalen Spaltes über den gesamten Umfang des Behälterrandes einen vorbestimmten Abstand relativ zum Behälter angehoben ist, so dass der Deckelrand und der Auflagerand (3) des Behälters parallel und der Behälterrand (3) und der Deckelrand (14) in der Abgießstellung mit einem vorbestimmten Abstand parallel zueinander angeordnet sind.

2. Kochgeschirr (1) nach Anspruch 1, **dadurch gekennzeichnet, dass** der Behälterrandabschnitt nach außen abgewinkelt ist, um den Auflagerand (3) auszubilden.

3. Kochgeschirr (1) nach Anspruch 1 oder 2, **dadurch gekennzeichnet, dass** die Behältergriffe (4, 4') an der Unterseite des Auflagerandes (3) befestigt sind.

4. Kochgeschirr (1) nach einem der Ansprüche 1 bis 3, **dadurch gekennzeichnet, dass** die U-Schenkel (5, 5') der Behältergriffe wenigstens einmal abgewinkelt und über einen vorbestimmten Abschnitt mit dem Auflagerand (3) verbunden sind.

5. Kochgeschirr (1) nach Anspruch 4, **dadurch gekennzeichnet, dass** sich die U-Schenkel (5, 5') über den Auflagerand (3) hinaus erstrecken und dann unter einem Winkel von ca. 90° abgewinkelt sind.

6. Kochgeschirr (1) nach Anspruch 5, **dadurch gekennzeichnet, dass** die U-Schenkel (5, 5') zweimal abgewinkelt sind, einmal auf Höhe des Auflagerandes (3), und einmal mit einem vorbestimmten Abstand zu der ersten Abwinkelung.

7. Kochgeschirr (1) nach einem der Ansprüche 4 bis 6, **dadurch gekennzeichnet, dass** an der Unterseite der Grifffläche (6) ein Isolierelement (7) angeordnet ist, welches sich über das Basiselement hinaus bis zwischen die U-Schenkel (5, 5') erstreckt.

8. Kochgeschirr (1) nach Anspruch 7, **dadurch gekennzeichnet, dass** das Isolierelement (7) Fixierstege (9) aufweist, welche an den Innenseiten der U-Schenkel (5, 5') und des Basiselementes anliegen.

9. Kochgeschirr (1) nach Anspruch 8, **dadurch gekennzeichnet, dass** die Höhe der Fixierstege (9) der Materialdicke der Griffelemente entsprechen.

10. Kochgeschirr (1) nach einem der Ansprüche 7 bis 9, **dadurch gekennzeichnet, dass** der zwischen den U-Schenkeln (5, 5') und dem Basiselement angeordnete Bereich des Isolierelementes (7) vertieft und/oder verkürzt ausgebildet ist.

11. Kochgeschirr (1) nach einem der Ansprüche 7 bis 10, **dadurch gekennzeichnet, dass** die Unterseite des Isolierelementes (7) geriffelt ausgebildet ist.

12. Kochgeschirr (1) nach einem der Ansprüche 7 bis 11, **dadurch gekennzeichnet, dass** die über den Deckelrand überstehenden Abschnitte der Deckelgriffe (12, 12') der Form der Vertiefung der Isolierelemente (7) entspricht.

13. Kochgeschirr (1) nach einem der Ansprüche 7 bis 12, **dadurch gekennzeichnet, dass** die Höhe der Vertiefung der Höhe des über den Deckelrand (14) überstehenden Abschnittes der Deckelgriffe (12, 12') entspricht.

14. Kochgeschirr (1) nach einem der Ansprüche 1 bis 13, **dadurch gekennzeichnet, dass** die Neigung der Deckelgriffe (12, 12') in etwa der Neigung der Griffflächen (6) entsprechen.

15. Kochgeschirr (1) nach einem der Ansprüche 1 bis 14, **dadurch gekennzeichnet, dass** die beiden Deckelgriffe (12, 12') über ein sich über den Deckel (18) zwischen den Deckelgriffen (12, 12') erstreckendes Halteelement (13) verbunden sind.

16. Kochgeschirr (1) nach einem der Ansprüche 1 bis 15, **dadurch gekennzeichnet, dass** die Deckelgriffe (12, 12') ein an dem Deckelrand (14) angeordnetes Stegelement (16) und ein sich beiderseitig über den Deckelrand (14) und über das Stegelement (16) erstreckendes Griffelement (17) aufweisen.

17. Kochgeschirr (1) nach einem der Ansprüche 1 bis 16, **dadurch gekennzeichnet, dass** der Deckelrand (14) die gleiche Neigung wie der Auflagerand (3) aufweist.

18. Kochgeschirr (1) nach einem der Ansprüche 1 bis 17, **dadurch gekennzeichnet, dass** die Deckelgriffe (12, 12') wenigstens in dem im Bereich des Deckelrandes (14) und über diesen hinaus erstreckenden Bereich Griffmulden (19) aufweisen.

19. Kochgeschirr (1) nach einem der Ansprüche 1 bis 18, **dadurch gekennzeichnet, dass** für die I,solierelemente (7) und die Deckelgriffe (12,12') das gleiche Material verwendet wird.

20. Kochgeschirr (1) nach einem der Ansprüche 1 bis 19, **dadurch gekennzeichnet, dass** der zwischen dem Auflagerand (3) und dem Isolierelement (7) zwischen den beiden einander gegenüberliegenden U-Schenkeln (5, 5') gebildete Spalt der Höhe und Breite des über den Deckelrand (14) überstehenden Abschnitts der Deckelgriffe (12, 12') entspricht.

## Claims

1. Cooking vessel (1) for cooking and draining, comprising a container (2) with two handles (4, 4') disposed laterally opposite one another and a top rim portion serving as a seating rim (3) and a lid (18) with at least one handle element (12, 12', 13) and a lid rim (14) which can be placed on the seating rim (3) of the container (2) in a positively fitting arrangement and secured to prevent lateral shifting in a cooking position, the container handles (4, 4') being disposed on the container (2) and designed in such a way that a gripping surface (6) above the seating rim (3) of the container (2) is angled and the lid (18) is provided with two lid handle elements (12, 12') lying opposite one another which extend laterally out beyond the lid rim (14), **characterised in that** the container handles are of a U-shaped design comprising two U legs (5, 5') and a base element forming the gripping surface (6), and in a draining position, the lid handle elements (12', 12") can be moved into engagement with the container handles (4, 4') in such a way that they locate between the U legs and base element of the container handles, as a result of which the lid is raised by a pre-defined distance relative to the container forming a narrow gap around the entire circumference of the container rim so that the lid rim and the seating rim (3) of the container are disposed parallel with one another and the container rim (3) and the lid rim (14) are disposed parallel with one another at a pre-defined distance in the draining position.

2. Cooking vessel (1) as claimed in claim 1, **characterised in that** the container rim portion is angled outwards in order to form the seating rim (3).

3. Cooking vessel (1) as claimed in claim 1 or 2, **characterised in that** the container handles (4, 4') are attached to the bottom face of the seating rim (3).

4. Cooking vessel (1) as claimed in one of claims 1 to 3, **characterised in that** the U legs (5, 5') of the container handles are angled at least once and are connected to the seating rim (3) across a pre-defined portion.

5. Cooking vessel (1) as claimed in claim 4, **characterised in that** the U legs (5, 5') extend out beyond the seating rim (3) and are then disposed at an angle of approximately 90°.

6. Cooking vessel (1) as claimed in claim 5, **characterised in that** the U legs (5, 5') are angled twice, once on a level with the seating rim (3) and once at a pre-defined distance from the first angled region.

7. Cooking vessel (1) as claimed in one of claims 4 to 6, **characterised in that** an isolating element (7) is disposed on the bottom face of the gripping surface (6), which extends out beyond the base element through to between the U legs (5, 5').

8. Cooking vessel (1) as claimed in claim 7, **characterised in that** the isolating element (7) has fixing webs (9), which lie against the inner faces of the U legs (5, 5') and base element.

9. Cooking vessel (1) as claimed in claim 8, **characterised in that** the height of the fixing webs (9) corresponds to the material thickness of the handle elements.

10. Cooking vessel (1) as claimed in one of claims 7 to 9, **characterised in that** the region of the isolating element (7) disposed between the U legs (5, 5') and base element is of a recessed and/or shortened design.

11. Cooking vessel (1) as claimed in one of claims 7 to 10, **characterised in that** the bottom face of the isolating element (7) is fluted.

12. Cooking vessel (1) as claimed in one of claims 7 to 11, **characterised in that** the portions of the lid handles (12, 12') extending beyond the lid rim correspond to the shape of the recess of the isolating elements (7).

13. Cooking vessel (1) as claimed in one of claims 7 to 12, **characterised in that** the height of the recess corresponds to the height of the portion of the lid handles (12, 12') extending beyond the lid rim (14).

14. Cooking vessel (1) as claimed in one of claims 1 to 13, **characterised in that** the inclination of the lid handles (12, 12') corresponds approximately to the inclination of the gripping surfaces (6).

15. Cooking vessel (1) as claimed in one of claims 1 to 14, **characterised in that** the two lid handles (12, 12') are connected via a retaining element (13) extending across the lid (18) between the lid handles (12, 12').

16. Cooking vessel (1) as claimed in one of claims 1 to 15, **characterised in that** the lid handles (12, 12') have a web element (16) disposed on the lid rim (14) and a gripping element (17) extending on both sides across the lid rim (14) and across the web element (16).

17. Cooking vessel (1) as claimed in one of claims 1 to 16, **characterised in that** the lid rim (14) has the same inclination as the seating rim (3).

18. Cooking vessel (1) as claimed in one of claims 1 to 17, **characterised in that** the lid handles (12, 12') have grip depressions (19) at least in the region extending in the region of the lid rim (14) and extending out beyond it.

19. Cooking vessel (1) as claimed in one of claims 1 to 18, **characterised in that** the same material is used for the isolating elements (7) and the lid handles (12, 12').

20. Cooking vessel (1) as claimed in one of claims 1 to 19, **characterised in that** the gap formed between the seating rim (3) and isolating element (7) between the two oppositely lying U legs (5, 5') corresponds to the height and width of the portion of the lid handles (12, 12') extending across the lid rim (14).

## Revendications

1. Ustensile culinaire de cuisson (1) destiné à cuire et à égoutter ou verser, comprenant un récipient (2) présentant deux poignées (4, 4') latérales agencées de manière mutuellement opposée, et un tronçon de bordure supérieur réalisé en tant que bord d'appui (3), l'ustensile culinaire comprenant également un couvercle (18) présentant au moins un élément de poignée (12, 12', 13) et un bord de couvercle (14), qui, dans une position de cuisson, peut être appliqué par complémentarité de formes et de manière sécurisée à l'encontre un coulissement latéral, sur le bord d'appui (3) du récipient (2), les poignées de récipient (4, 4') étant agencées sur le récipient (2) et configurées de manière telle qu'une surface de préhension de poignée (6) soit coudée au-dessus du bord d'appui (3) du récipient (2), et le couvercle (18) étant conçu avec deux éléments de poignée de couvercle (12, 12') mutuellement opposés, qui s'étendent latéralement au-delà du bord de couvercle (14),
**caractérisé en ce que** les poignées de récipient sont d'une configuration en forme de U comprenant deux ailes de U (5, 5') et un élément de base formant la surface de préhension de poignée (6), et **en ce que** les éléments de poignée de couvercle (12', 12") peuvent, dans une position d'égouttage, être amenés en prise avec les poignées de récipient (4, 4') de manière à venir s'enclencher entre l'aile de U et l'élément de base des poignées de récipient, ce qui fait que le couvercle est soulevé d'une distance prédéterminée par rapport au récipient en formant un interstice étroit sur la totalité de la périphérie du bord de récipient, de sorte que le bord du couvercle et le bord d'appui (3) du récipient sont agencés parallèlement l'un à l'autre et le bord de récipient (3) et le bord de couvercle (14) sont agencés parallèlement l'un à l'autre avec une distance d'espacement prédéterminée dans la position d'égouttage.

2. Ustensile culinaire de cuisson (1) selon la revendication 1, **caractérisé en ce que** le tronçon de bordure du récipient est coudé vers l'extérieur en vue de former le bord d'appui (3).

3. Ustensile culinaire de cuisson (1) selon la revendication 1 ou la revendication 2, **caractérisé en ce que** les poignées de récipient (4, 4') sont fixées sur le côté inférieur du bord d'appui (3).

4. Ustensile culinaire de cuisson (1) selon l'une des revendications 1 à 3, **caractérisé en ce que** les ailes de U (5, 5') des poignées de récipient sont coudées au moins une fois, et sont reliées, sur un tronçon prédéterminé, au bord d'appui (3).

5. Ustensile culinaire de cuisson (1) selon la revendication 4, **caractérisé en ce que** les ailes de U (5, 5') s'étendent au-delà du bord d'appui (3) et sont ensuite coudées sous un angle d'environ 90°.

6. Ustensile culinaire de cuisson (1) selon la revendication 5, **caractérisé en ce que** les ailes de U (5, 5') sont coudées deux fois, une première fois au niveau du bord d'appui (3), et une autre fois à une distance prédéterminée de la première zone coudée.

7. Ustensile culinaire de cuisson (1) selon l'une des revendications 4 à 6, **caractérisé en ce que** sur le côté inférieur de la surface de préhension de poignée (6) est agencé un élément isolant (7), qui s'étend au-delà de l'élément de base jusqu'entre les ailes de U (5, 5').

8. Ustensile culinaire de cuisson (1) selon la revendication 7, **caractérisé en ce que** l'élément isolant (7) présente des nervures de fixation (9), qui s'appuient contre les côtés intérieurs des ailes de U (5, 5') et de l'élément de base.

9. Ustensile culinaire de cuisson (1) selon la revendication 8, **caractérisé en ce que** la hauteur des nervures de fixation (9) correspond à l'épaisseur de matériau des éléments de poignée.

10. Ustensile culinaire de cuisson (1) selon l'une des revendications 7 à 9, **caractérisé en ce que** la zone de l'élément isolant (7) agencée entre les ailes de U (5, 5') et l'élément de base est d'une configuration en creux et/ou raccourcie.

11. Ustensile culinaire de cuisson (1) selon l'une des revendications 7 à 10, **caractérisé en ce que** le côté inférieur de l'élément isolant (7) est d'une configuration striée.

12. Ustensile culinaire de cuisson (1) selon l'une des revendications 7 à 11, **caractérisé en ce que** les tronçons des poignées de couvercle (12, 12'), qui dépassent du bord de couvercle, ont une forme correspondant à celle du creux des éléments isolants (7).

13. Ustensile culinaire de cuisson (1) selon l'une des revendications 7 à 12, **caractérisé en ce que** la hauteur du creux correspond à la hauteur du tronçon des poignées de couvercle (12, 12'), qui dépasse du bord de couvercle (14).

14. Ustensile culinaire de cuisson (1) selon l'une des revendications 1 à 13, **caractérisé en ce que** l'inclinaison des poignées de couvercle (12, 12') correspond environ à l'inclinaison des surfaces de préhension de poignée (6).

15. Ustensile culinaire de cuisson (1) selon l'une des revendications 1 à 14, **caractérisé en ce que** les deux poignées de couvercle (12, 12') sont reliées mutuellement par l'intermédiaire d'un élément de maintien (13) s'étendant par-dessus le couvercle (18), entre les poignées de couvercle (12, 12').

16. Ustensile culinaire de cuisson (1) selon l'une des revendications 1 à 15, **caractérisé en ce que** les poignées de couvercle (12, 12') présentent un élément de talon (16) agencé sur le bord de couvercle (14) et un élément de préhension de poignée (17), qui s'étend de part et d'autre au-delà du bord de couvercle (14) et par-dessus l'élément de talon (16).

17. Ustensile culinaire de cuisson (1) selon l'une des revendications 1 à 16, **caractérisé en ce que** le bord de couvercle (14) présente la même inclinaison que le bord d'appui (3).

18. Ustensile culinaire de cuisson (1) selon l'une des revendications 1 à 17, **caractérisé en ce que** les poignées de couvercle (12, 12') présentent, au moins dans la zone du bord de couvercle (14) et dans une zone s'étendant au-delà de ce dernier, des cavités de poignée (19).

19. Ustensile culinaire de cuisson (1) selon l'une des revendications 1 à 18, **caractérisé en ce que** l'on utilise le même matériau pour les éléments isolants (7) et les poignées de couvercle (12, 12').

20. Ustensile culinaire de cuisson (1) selon l'une des revendications 1 à 19, **caractérisé en ce que** l'interstice formé entre le bord d'appui (3) et l'élément isolant (7), entre les deux ailes de U (5, 5') mutuellement opposées, correspond à la hauteur et à la largeur du tronçon des poignées de couvercle (12, 12'), qui dépasse au-delà du bord de couvercle (14).
